# EUROPEAN PATENT SPECIFICATION

(11) **EP 2 931 779 B1**
(45) Date of publication and mention of the grant of the patent: **30.08.2017**
(21) Application number: 13821018.2
(22) Date of filing: 13.12.2013
(51) Int. Cl.: C08G 18/77, C08J 9/00, C08K 5/00, C08G 18/08, C09K 21/00, C09K 21/14, C08K 5/5333

(54) **FLAME RETARDANT FOAM FORMULATIONS**
FLAMMHEMMENDE SCHAUMSTOFFFORMULIERUNGEN
FORMULATIONS DE MOUSSE IGNIFUGE

(30) Priority: 14.12.2012 US 201261737267 P
(43) Date of publication of application: 21.10.2015
(73) Proprietor: Dow Global Technologies LLC, Midland, MI 48641 (US)
(72) Inventor: SKOWRONSKI, Michael, J., Marietta, GA 30062 (US); KRISHNAMOORTHY, Jayaraman, Pearland, TX 77584 (US); SNIDER, David, E., Jasper, GA 30143 (US); PEREZ, Hector, Angleton, TX 77515 (US)
(74) Representative: Beck Greener
(86) International application number: PCT/US2013/075050
(87) International publication number: WO 2014/093841

(56) References cited:
- EP-A1- 1 411 071
- EP-A2- 1 785 439
- DE-A1- 19 744 426

## Description

### Field of Disclosure

Embodiments of the present disclosure are directed towards flame retardant foam formulations.

### Background

Halogen containing flame retardants can be used in a variety of applications. For example, halogen containing flame retardants can be present in a foam formulation to mitigate effects that can result when a foam formed from the foam formulation is exposed to heat and/or a flame. Halides, such as chlorides and/or bromides, can scavenge active radicals produced during combustion of the foam. However, presence of a halogen containing flame retardant can cause undesirable smoke generation and fumes.

A range of flame retardants have been used in place of halogenated flame retardants. These replacement flame retardants can work through various mechanisms, which include forming a barrier layer, which can be referred to as intumescence, lowering of temperature through endothermic reactions such as vaporization of water, and/or by decelerating the combustion process by diluting an oxygen concentration with non-flammable gases. In particular, diethyl (hydroxymethyl) phosphonate (DEHP) and triethylphosphate are known separately as flame retardants, for example from EP1785439 and DE 19744426.

### Summary

The present disclosure provides flame retardant foam formulations. The flame retardant foam formulation comprises diethyl (hydroxymethyl) phosphonate, , triethyl phosphate, a polyisocyanate having a functionality in a range from 2.0 to 10.0, wherein the polyisocyanate is present in an amount to provide an isocyanate index of from 100 to 320, a compound having active hydrogen groups capable of reacting with the polyisocyanate, a blowing agent, and a catalyst.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Flame retardant foam formulations are described herein. Surprisingly, it has been found that a halogen free flame retardant can be used in a flame retardant foam formulation that can be cured to form a flame retardant foam, while providing comparable performance to a halogenated flame retardant. The absence of halogen in the flame retardant can be associated with benefits, such as reducing smoke generation upon combustion of the flame retardant foam as well as reducing fume creation upon combustion of the flame retardant foam, as compared to some other foams having halogen flame retardants.

The flame retardant foam formulation includes a diethyl (hydroxymethyl) phosphonate (DEHP) and triethyl phosphate. DEHP can be incorporated in the structure of the flame retardant foam through reaction of the hydroxyl group in DEHP with the polyisocyanate in the flame retardant foam formulation. The incorporation of the DEHP, via the hydroxyl group, with the polyisocyanate can help impede the loss of DEHP, e.g., due to vaporization at high temperatures that can occur during combustion. This incorporation can help provide desirable flame retardant characteristics.

DEHP is a monophosphonate having a hydroxyl group. It can have a concentration in a range from 1 to 15 parts by weight (PBW) per 100 PBW of a compound having active hydrogen groups. All individual values and subranges from and including 1 to 15 PBW per 100 PBW of the compound having the active hydrogen groups are included and disclosed herein; for example the mono-phosphonate having the hydroxyl group can have a concentration in a range with a lower limit of 1 PBW, 1.5 PBW, or 2 PBW per 100 PBW of the compound having the active hydrogen groups to an upper limit of 15 PBW, 10 PBW, or 8 PBW per 100 PBW of the compound having the active hydrogen groups. For example, the mono-phosphonate can have a concentration in a range from 1 to 15 PBW per 100 PBW of the compound having the active hydrogen groups, 1.5 to 10 PBW per 100 PBW of the compound having the active hydrogen groups, or 2 to 8 PBW per 100 PBW of the compound having the active hydrogen groups.

The flame retardant foam formulation also includes a polyisocyanate. An isocyanate group of the polyisocyanate can combine with a hydrogen group of a compound having active hydrogen groups capable of reacting with the polyisocyanate (e.g., polyol) to form a urethane linkage. Isocyanates can also undergo trimerization in the presence of a suitable catalyst. The polyisocyanate can have a functionality in a range from 2.0 to 10.0. The functionality of the polyisocyanate can be defined as an average number of isocyanate groups per molecule of the polyisocyanate. All individual values and subranges from and including 2.0 to 10.0 are included herein and disclosed herein; for example the polyisocyanate can have a functionality in a range with a lower limit of 2.0, 3.0, 4.0, 5.0 to an upper limit of 10.0, 8.0, 7.0, 6.0. For example, the polyisocyanate can have a functionality in a range from 2.0 to 10.0, 2.0 to 8.0, 2.0 to 6.0, 2.0 to 5.0, or 2.0 to 4.0.

Examples of the polyisocyanate include those derived from methylene diphenyl diisocyanate (MDI) and polymeric MDI (PMDI), among others. MDI and PMDI have a higher boiling point than some other polyisocyanates, for example, toluene diisocyanate (TDI), thus making MDI and PMDI less volatile. TDI has one phenylene ring, while MDI has two phenylene rings. The additional phenylene rings of a polyisocyanate formed from MDI or PMDI can help provide a decreased volatility versus a polyisocyanate formed from TDI. This can provide a benefit when mixing the flame retardant foam formulation, for example. For instance, less polyisocyanate is volatilized from the flame retardant formulation.

The polyisocyanate can have an isocyanate group (NCO) content of 10 to 45 weight percent (wt. %) NCO. All individual values and subranges from 10 wt. % NCO to 50 wt. % NCO are included; for example, the wt. % NCO can be in a range with a lower limit of 10 wt. % NCO, 20 wt. % NCO, or 25 wt. % NCO to an upper limit of 50 wt. % NCO, 40 wt. % NCO, or 35 wt. % NCO. For example, the polyisocyanate can have a wt. % NCO in a range from 10 wt. % NCO to 35 wt. % NCO, 10 wt. % NCO to 40 wt. % NCO, 20 wt. % NCO to 35 wt. % NCO, 20 wt. % NCO to 40 wt. % NCO, 20 wt. % NCO to 50 wt. % NCO, 25 wt. % NCO to 35 wt. % NCO, 25 wt. % NCO to 40 wt. % NCO, and 25 wt. % NCO to 50 wt. % NCO.

The polyisocyanate is present in an amount which provides an isocyanate index in a range from 100 to 320, preferably 130 to 320. All individual values and subranges from and including 100 to 320 are included herein and disclosed herein; for example the polyisocyanate can have a concentration relative to the compound having the active hydrogen groups, which provides an isocyanate index in a range with a lower limit of 100, 130, 150, 200 to an upper limit of 320, 280, 250. The polyisocyanate is present in an amount to provide for an isocyanate index in a range from 100 to 250, 100 to 280, 100 to 320, 130 to 250, 130 to 280, 130 to 320, 150 to 250, 150 to 280, 150 to 320, 200 to 250, 200 to 280, or 200 to 320. An isocyanate index of 100 corresponds to one isocyanate equivalent per active hydrogen groups present in the compound having the active hydrogen groups. Accordingly, if the isocyanate index is 130, there is a 30% excess of isocyanate groups to active hydrogen groups.

The flame retardant foam formulation includes a compound, (e.g., a blend), having active hydrogen groups capable of reacting with the polyisocyanate. Examples of the compound having the active hydrogen groups include polyols, polyesters, polyethers, polyacrylates, amine terminated polymers, and combinations thereof, among others. The blend can include the compound having active hydrogen groups, e.g., polyols, polyesters, polyethers, polyacrylates, amine terminated polymers, and combinations thereof. According to one or more embodiments, the compound having the active hydrogen groups can be selected from the group of a polyether polyol, a polyester polyol, polycarbonates, and combinations thereof. Polyols can be defined as compounds that are a source of hydroxyl or other functionalities capable of reacting with isocyanate, for example.

Examples of polyether polyols include hydroxylated soybean oil polyols, propoxylated and/or ethoxylated glycerol polyols, ethoxylated and/or propoxylated sorbitol polyols, propoxylated and/or ethoxylated glycols, ethoxylated and/or propoxylated sucrose polyols, amine-initiated polyols such as propoxylated ethylenediamine polyols, propoxylated/ethoxylated ethylenediamine polyols, toluenediamine propoxylated/ethoxylated polyols, toluenediamine propoxylated polyols, among others. Examples of commonly available polyether polyols include, but are not limited to, VORANOL™ polyols (The Dow Chemical Company), VORANOL™ VORACTIV™ polyols (The Dow Chemical Company). Polyether polyols can be produced by reacting either amines or materials having terminal hydroxyl groups with alkylene oxides using a catalyst.

Examples of polyester polyols include DIOREZ™ polyester polyols, available from The Dow Chemical Company, STEPANPOL® polyester polyols, available from Stepan Company, Terol® polyester polyols, available from Oxid, and Terate® polyester polyols, available from Invista, among others. Polyester polyols can be produced by reacting either diacids or derivatives with glycols having terminal hydroxyl groups using a catalyst. Diacids can include, but are not limited to, terephthalic acid, for example. Glycol sources can include, but are not limited to, ethylene glycol, diethylene glycol, propylene glycol, dipropylene glycol, glycerine, and 1,4-butanediol, among others.

The polyol can have an average functionality within a range from 2 to 8. All individual values and subranges from and including 2 to 8 are included and disclosed herein, for example, the polyol can have an average functionality within a range from 2 to 8, 2 to 7, 2 to 6, 2 to 5, 2 to 4, or 2 to 3. The polyol can have an average hydroxyl number from 100 to 800 preferably within a range of 150 to 600. The hydroxyl number can be defined as the milligrams of potassium hydroxide equivalent to the hydroxyl content in one gram of polyol or other hydroxyl compound.

The flame retardant foam forming formulation includes a blowing agent. Examples of the blowing agent include *in situ-*generated carbon dioxide (e.g., reaction of water with isocyanate), formic acid, alkanes such as n-pentane, i-pentane, c-pentane, hydrofluoroalkanes such as 1,1,1,3,3-pentafluoropropane, hydrofluoroolefin (HFO), such as HFO-1225yeZ ((Z)1,1,1,2,3-pentafluoropropene), HFO-1225ye (1,2,3,3,3-pentafluoropropene), HFO-1225zc (1,1,3,3,3-pentafluoropropene), hydrochlorofluoroolefin (HCFO), such as HCFO-1233zd (1-chloro-3,3,3-trifluoropropene), HCFO-1223 (dichlorotrifluoropropene), HCFO-1233xf (2-chloro-3,3,3-triffuoropropene) and combinations thereof, among others.

The blowing agent, i.e., not the carbon oxides from water and formic acids reaction with isocyanate, can have a concentration in a range from 1 to 35 parts by weight (PBW) per 100 PBW of the compound having the active hydrogen groups. All individual values and subranges from and including 1 PBW per 100 PBW of the compound having the active hydrogen groups to 35 PBW per 100 PBW of the compound having the active hydrogen groups are included herein and disclosed herein; for example the blowing agent can have a concentration in a range with a lower limit of 1 PBW per 100 PBW of the compound having the active hydrogen groups, 5 PBW per 100 PBW of the compound having the active hydrogen groups, 10 PBW per 100 PBW of the compound having the active hydrogen groups to an upper limit of 35 PBW per 100 PBW of the compound having the active hydrogen groups, 30 PBW per 100 PBW of the compound having the active hydrogen groups, 25 PBW per 100 PBW of the compound having the active hydrogen groups.

The flame retardant foam formulation includes a catalyst. For example, use of the catalyst can speed the reaction of the isocyanate group of the polyisocyanate with the active hydrogen groups of the compound having the active hydrogen groups and/or can also speed the trimerization of isocyanates to form isocyanurate. Examples of the catalyst can include pentamethyldiethylenetriamine, potassium 2-ethylhexanoate in diethylene glycol, quaternary ammonium salt, triethylamine, and combinations thereof, among others.

The catalyst can have a concentration in a range from 0.01 to 5.0 parts by weight (PBW) per 100 PBW of the compound having the active hydrogen groups. All individual values and subranges from and including 0.01 PBW per 100 PBW of the compound having the active hydrogen groups to 5.0 PBW per 100 PBW of the compound having the active hydrogen groups are included herein and disclosed herein; for example the catalyst can have a concentration in a range with a lower limit of 0.01 PBW per 100 PBW of the compound having the active hydrogen groups, 0.05 PBW per 100 PBW of the compound having the active hydrogen groups, 1.0 PBW per 100 PBW of the compound having the active hydrogen groups to an upper limit of 5.0 PBW per 100 PBW of the compound having the active hydrogen groups, 4.0 PBW per 100 PBW of the compound having the active hydrogen groups, 3.0 PBW per 100 PBW of the compound having the active hydrogen groups.

The flame retardant foam formulation can include other flame retardants. For example, the flame retardant foam formulation can include other non-halogenated flame retardants (excluding chlorinated, brominated compounds). The non-halogenated flame retardant can include FYROL 6, available from Supresta.

The flame retardant foam formulation can include a surfactant. Examples of the surfactant include polyalkylene oxides and silicone based interfacial agents, such as organosilicone surfactants, among others. Polyalkylene oxides, for example, can include random and/or block copolymers of ethylene oxide and propylene oxide and butylene oxide, among others. An example of a polyalkylene oxide surfactant is a polyethylene oxide-co-propylene oxide-co-butylene oxide triblock organic surfactant, which is sold under the trade name VORASURF™ 504 available from The Dow Chemical Company. Examples of organosilicone surfactants include, but are not limited to, polysiloxane/polyether copolymers such as Tegostab™ (available from Evonik Industries), DABCO surfactant (available from Air Products and Chemicals), and Niax™ L-5614 surfactant (available from Momentive Performance Products).

The surfactant can have a concentration in a range from 0.1 to 8.0 PBW per 100 PBW of the compound having the active hydrogen groups. All individual values and subranges from and including 0.1 PBW per 100 PBW of the compound having the active hydrogen groups to 8.0 PBW per 100 PBW of the compound having the active hydrogen groups are included herein and disclosed herein; for example the surfactant can have a concentration in a range with a lower limit of 0.1 PBW per 100 PBW of the compound having the active hydrogen groups, 0.5 PBW per 100 PBW of the compound having the active hydrogen groups, 1.5 PBW per 100 PBW of the compound having the active hydrogen groups to an upper limit of 8.0 PBW per 100 PBW of the compound having the active hydrogen groups, 7.0 PBW per 100 PBW of the compound having the active hydrogen groups, 6.0 PBW per 100 PBW of the compound having the active hydrogen groups.

Embodiments of the present disclosure provide a flame retardant foam formed by curing the flame retardant foam formulation. In a number of embodiments, the flame retardant foam formulation can be utilized to form a rigid, foamed, closed cell polymer. Such a polymer can be prepared by mixing and reacting components of the flame retardant foam formulation, such as a compound having active hydrogen groups/blowing agent, along with an isocyanate component, i.e. at least two streams; or a compound having active hydrogen groups, a blowing agent, and an isocyanate, i.e. at least three streams, wherein for example the compound having active hydrogen groups and blowing agent mix just prior to contact with the isocyanate. The compound having active hydrogen groups can include flame retardants (including the mono-phosphonate having the hydroxyl group), surfactants, catalysts and optionally other additives. Additional streams may be included, as desired, for the introduction of various catalysts and other additives.

Mixing of streams may be carried out either in a high pressure or a low pressure apparatus, a mix head with or without a static mixer for combining the streams, and then depositing the reacting mixture onto a substrate, such as a facing material. This substrate may be, for example, a rigid or flexible facing sheet, which can be conveyed, continuously or discontinuously, along a production line, or directly onto a conveyor belt, for example. A type of facing material is a thin metal sheet, for instance made of steel optionally coated with a suitable material such as polyester or an epoxy resin to help reduce rust formation. Alternatively, the mixture may be deposited into an open mold or distributed via laydown equipment into an open mold or deposited at or into another location, i.e., a pour in place application. In the case of deposition inside a mold on a facing sheet, a second sheet may be applied on the top of the deposited mixture. In other embodiments, the mixture can be injected into a closed mold, with or without vacuum assistance for cavity-filling. Both when a mold is employed as well as when a continuous production line is employed, the mold or the continuous production line can be heated in order to facilitate the reaction process to form the flame retardant foam.

The DEHP , compounds having the active hydrogen groups, the blowing agent, the surfactant, and optionally additional additives can be mixed as a first component and reacted with a second component that includes the polyisocyanate and a third component that includes the catalyst, for example.
Each component can be injected at an injection point, e.g., where mixing of the components occurs. Upon mixing of the components, the flame retardant foam can be formed *in situ*, e.g., via curing.

A flame retardant foam can be formed by curing the flame retardant foam formulation. The flame retardant foam formulation can be cured at a temperature in a range from 5 degrees Celsius (°C) to 100 °C. All individual values and subranges from and including 5 °C to 100 °C are included herein and disclosed herein; for example the flame retardant foam formulation can be cured at a temperature in a range with a lower limit of 5 °C, 10 °C, 15 °C to an upper limit of 100 °C, 95 °C, 90 °C.

### EXAMPLES

In the Examples, various terms and designations for materials were used including, for example, the following:
A compound having active hydrogen groups capable of reacting with the polyisocyanate, polyol A (polyester polyol from dimethyl terephthalate process residue, OH # : 305, functionality = 2.2, available from Invista); a compound having active hydrogen groups capable of reacting with the polyisocyanate, polyol B (polyester polyol from dimethyl terephthalate process residue, OH # : 195, functionality = 2, available from Invista); a compound having active hydrogen groups capable of reacting with the polyisocyanate, polyol C (polyester polyol from terephthalic acid, diethylene glycol, glycerine, and polyethylene glycol, OH # : 315, functionality = 2.4, available from The Dow Chemical Company); a compound having active hydrogen groups capable of reacting with the polyisocyanate, polyol D (sorbitol-initiated polyether polyol, OH # : 479, functionality = 6, available from The Dow Chemical Company); a compound having active hydrogen groups capable of reacting with the polyisocyanate, polyol E (glycerine-initiated polyether polyol, OH # : 33.5, functionality = 3, available from The Dow Chemical Company); a compound having active hydrogen groups capable of reacting with the polyisocyanate, polyol F (toluenediamine-initiated polyether polyol, OH # : 450, functionality = 4, available from BASF); a compound having active hydrogen groups capable of reacting with the polyisocyanate, polyol G/flame retardant (tetrabromo phthalate diol (TBPD), OH # : 220, functionality = 2, available from Great Lakes Chemical Service, Inc.); flame retardant (triethyl phosphate, product reference TEP, available from the Eastman Chemical Company); flame retardant (tris(chloropropyl) phosphate, product reference TCPP (Fyrol PCF), available from Supresta); flame retardant (DEHP available from Huangshi Fuertai Chemical Company); surfactant (silicone surfactant, available from Evonik Industries); catalyst (pentamethyldiethylenetriamine, product reference Polycat 5, available from Air Products and Chemicals, Inc.); catalyst (potassium 2-ethylhexanoate in diethylene glycol, product reference Dabco K15, available from Air Products and Chemicals, Inc.); catalyst (quaternary ammonium salt, product reference Dabco TMR 2, available from Air Products and Chemicals, Inc.); catalyst (catalyst blend, product reference CM759, available from The Dow Chemical Company); blowing agent (1,1,1,3,3-pentafluoropropane, product reference HFC 245fa, available from Honeywell Corporation); blowing agent (85/15 blend of cyclopentane/isopentane, product reference IP 85, available from Haltermann Solutions); polyisocyanate A (polymeric MDI, 30.5 weight percent NCO, functionality = 3, available from The Dow Chemical Company).

### Comparative Example A

Comparative Example A was prepared as follows. The polyol was prepared by adding polyol A (32.75 grams), polyol B (8.18 grams), polyol D (2.73 grams), polyol E (7.64 grams), polyol F (3.28 grams), TBPD (3.71 grams), TEP (2.76 grams), TCPP (Fyrol PCF) (6.69 grams), surfactant (1.20 grams), Dabco TMR 2 (0.28 grams), and water (0.72 grams) to a container. The contents of the container were shaken for 3 minutes to obtain a homogenous solution. CM 759 (1.75 grams) was added to the contents of the container and mixed with an air mixer for 3 minutes at 700 revolutions per minute (RPM). IP 85 (8.60 grams) was added to the contents of the container and stirred with a wooden blade for 3 minutes, then additional IP 85 was added to the container to account for blowing agent lost during stirring, until 8.6 grams of IP 85 was present in the container. Polyisocyanate A (136.20) grams was added to the contents of the container and stirred with a pneumatic mixer for 5 seconds at 1500 RPM.

### Comparative Example B

Comparative Example B was prepared as follows. Comparative Example B was prepared as Comparative Example A except, the formulation was adjusted according to Comparative Example B in Table I, Polycat 5 (0.08 grams) and Dabco K15 (0.11 grams) were used when preparing the polyol, and HFC 245fa (11.80 grams) was used instead of IP 85.

**Table I**

| | Com. Ex. A | Com. Ex. B |
|---|---|---|
| Polyol A | 32.75 | 17.18 |
| Polyol B | 8.18 | 25.77 |
| Polyol D | 2.73 | 2.87 |
| Polyol E | 7.64 | 8.60 |
| Polyol F | 3.28 | 2.87 |
| TBPD | 3.71 | 0.00 |
| TEP | 2.76 | 1.79 |
| TCPP (Fyrol PCF) | 6.69 | 7.87 |
| Tegostab B 8461 | 1.20 | 1.41 |
| Dabco TMR 2 | 0.28 | 0.41 |
| Polycat 5 | 0.00 | 0.08 |
| Dabco K15 | 0.00 | 0.11 |
| Water | 0.72 | 1.03 |
| CM 759 | 1.75 | 1.26 |
| IP 85 | 8.60 | 0.00 |
| HFC 245fa | 0.00 | 11.80 |
| Polyisocyanate A | 136.20 | 116 |

### Example 1 - Flame Retardant Foam Formulation

A flame retardant foam formulation, Example 1, was prepared as follows. Example 1 was prepared as Comparative Example B except, the formulation was adjusted according to Example 1 in Table II and DEHP (3.26 grams) was used instead of TCPP (Fyrol PCF).

### Example 2 - Flame Retardant Foam Formulation

A flame retardant foam formulation, Example 2, was prepared as follows. Example 2 was prepared as Example 1 except, the formulation was adjusted according to Example 2 in Table II and HFC 245fa (17.00 grams) was used instead of IP 85.

### Example 3 - Flame Retardant Foam Formulation

A flame retardant foam formulation, Example 3, was prepared as follows. Example 3 was prepared as Example 1 except, the formulation was adjusted according to Example 3 in Table II and polyol C (34.46 grams) was used instead of polyol A.

**Table II**

| | Ex. 1 | Ex. 2 | Ex. 3 |
|---|---|---|---|
| Polyol A | 34.80 | 34.34 | 0.00 |
| Polyol C | 0.00 | 0.00 | 34.36 |
| Polyol B | 8.70 | 8.59 | 8.59 |
| Polyol D | 2.90 | 2.86 | 2.87 |
| Polyol E | 8.12 | 8.02 | 8.01 |
| Polyol F | 3.48 | 3.43 | 3.43 |
| TEP | 6.65 | 6.56 | 6.56 |
| DEHP | 3.26 | 3.21 | 3.21 |
| Surfactant | 1.86 | 1.84 | 1.84 |
| Dabco TMR 2 | 0.30 | 0.30 | 0.30 |
| Polycat 5 | 0.07 | 0.07 | 0.07 |
| Water | 0.77 | 0.75 | 0.76 |
| CM 759 | 1.29 | 1.29 | 1.27 |
| IP 85 | 8.90 | 0.00 | 9.00 |
| HFC 245fa | 0.00 | 17.00 | 0.00 |
| Polyisocyanate A | 148.20 | 144.00 | 146.10 |

### Comparative Example C

Comparative Example C was prepared as follows. Comparative Example A was cured for approximately 3 hours in an oven maintained at a temperature from 51.7 degrees Celsius (°C) to 54.4 °C to form Comparative Example C.

### Comparative Example D

Comparative Example D was prepared as follows. Comparative Example D was prepared as Comparative Example C with the change that Comparative Example B was used in place of Comparative Example A.

### Example 4 - Flame Retardant Foam

A flame retardant foam, Example 4, was prepared as follows. Example 1 was cured for approximately 3 hours in an oven maintained at a temperature from 51.7 degrees Celsius (°C) to 54.4 °C to form Example 4.

### Examples 5-6 - Flame Retardant Foam

Flame retardant foams, Examples 5-6, were prepared as follows. Examples 5-6 were prepared as Example 4 with the change that Examples 2-3 were respectively used in place of Example 1.

NBS smoke chamber values for Comparative Examples C and D and Examples 4 to 6 are reported in Table III and Table IV, respectively, and were determined by ASTM E-662. 2 cured samples of each of Comparative Examples C and D and Examples 4 to 6 of dimensions 3"x3"x1" were used for testing. The average NBS value was calculated for the samples.

Flame height for Comparative Examples C and D and Examples 4 to 6 is reported in Table III and Table IV, respectively, and was measured according to the Butler Chimney Test (ASTM D3014). Samples of dimensions 10"x0.75"x0.75" of Comparative Examples C and D and Examples 4 to 6 made in Ziploc bags were used for testing.

Mass retention for Comparative Examples C and D and Examples 4 to 6 is reported in Table III and Table IV, respectively, and was measured by weighing the samples used for the measurement of flame height before and after the testing for flame height.

NBS smoke chamber values, flame height, and mass retention for Comparative Examples C and D are reported in Table III.

**Table III**

| Product | NBS Smoke Chamber Value | Flame Height (in) | Mass Retention (%) |
|---|---|---|---|
| Com. Ex. C | 62 | 10.4 | 92 |
| Com. Ex. D | 61 | 9.2 | 91 |

NBS smoke chamber values, flame height, and mass retention for Examples 9 to 16 are reported in Table IV.

**Table IV**

| Product | NBS Smoke Chamber Value | Flame Height (in) | Mass Retention (%) |
|---|---|---|---|
| Ex. 4 | 36 | 11.7 | 91 |
| Ex. 5 | 45 | 10.1 | 89 |
| Ex. 6 | 33 | 12.0 | 88 |

A lower NBS smoke chamber value indicates a decreased amount of smoke generation and thus a desirable performance characteristic of a flame retardant. The values reported in Table III and Table IV show that each of Examples 4 to 6 had a lower NBS smoke chamber value than both Comparative Examples C and D. For example, lower NBS smoke chamber values are demonstrated between Comparative Example C and Examples 4 and 6, which include IP 85 as the blowing agent. In addition, similar or lower NBS smoke chamber values are demonstrated between Comparative Example D and Example 5, which includes HFC 245fa as the blowing agent.

A lower value flame height and higher mass retention indicate desirable performance characteristics of a flame retardant. The values reported in Table III and Table IV show that Examples 4 to 6 possessed similar values for flame height and mass retention as Comparative Example C and Comparative Example D.

## Claims

1. A flame retardant foam formulation comprising:
diethyl (hydroxymethyl) phosphonate;
triethyl phosphate;
a polyisocyanate having a functionality in a range from 2.0 to 10.0, wherein the polyisocyanate is present in an amount to provide for an isocyanate index of from 100 to 320;
a compound having active hydrogen groups capable of reacting with the polyisocyanate;
a blowing agent; and
a catalyst.

2. The flame retardant foam formulation of claim 1, wherein the diethyl (hydroxymethyl) phosphonate-has a concentration in a range from 1 to 15 parts by weight (PBW) per 100 PBW of the compound having the active hydrogen groups.

3. The flame retardant foam formulation of claim 1, wherein the diethyl (hydroxymethyl) phosphonate has a concentration in a range from 1.5 to 10 PBW per 100 PBW of the compound having the active hydrogen groups.

4. The flame retardant foam formulation of claim 1, wherein the diethyl (hydroxymethyl) phosphonate has a concentration in a range from 2 to 8 PBW per 100 PBW of the compound having the active hydrogen groups.

5. The flame retardant foam formulation of claim 1, wherein the polyisocyanate is present in an amount to provide for an isocyanate index of from 130 to 320.

6. The flame retardant foam formulation of any one of the preceding claims, wherein the polyisocyanate has an isocyanate (NCO) content of 10 to 50 weight percent NCO.

7. The flame retardant foam formulation of any one of the preceding claims, wherein the compound having the active hydrogen groups is selected from the group of polyols, polyesters, polyethers, polyacrylates, amine terminated polymers, and combinations thereof.

8. The flame retardant foam formulation of any one of the preceding claims, wherein the polyol is selected from the group of polyether polyols, polyester polyols, polycarbonates, and combinations thereof.

9. The flame retardant foam formulation of any one of the preceding claims, wherein the blowing agent is selected from the group of in situ-blown carbon dioxide, formic acid, alkanes, hydrofluoroalkanes, and combinations thereof.

10. The flame retardant foam formulation of any one of the preceding claims, wherein the polyisocyanate is derived from methylene diphenyl diisocyanate.

11. A flame retardant foam formed by curing any one of the preceding formulations.

## Patentansprüche

1. Eine flammhemmende Schaumstoffformulierung, beinhaltend:
Diethyl(hydroxymethyl)phosphonat;
Triethylphosphat;
ein Polyisocyanat mit einer Funktionalität in einem Bereich von 2,0 bis 10,0, wobei das Polyisocyanat in einer Menge vorliegt, um einen Isocyanatindex von 100 bis 320 bereitzustellen;
eine Verbindung mit Gruppen aktiven Wasserstoffs, die mit dem Polyisocyanat reagieren können;
ein Treibmittel; und
einen Katalysator.

2. Flammhemmende Schaumstoffformulierung gemäß Anspruch 1, wobei das Diethyl(hydroxymethyl)phosphonat eine Konzentration in einem Bereich von 1 bis 15 Gewichtsteilen (GT) pro 100 GT der Verbindung mit den Gruppen aktiven Wasserstoffs aufweist.

3. Flammhemmende Schaumstoffformulierung gemäß Anspruch 1, wobei das Diethyl(hydroxymethyl)phosphonat eine Konzentration in einem Bereich von 1,5 bis 10 GT pro 100 GT der Verbindung mit den Gruppen aktiven Wasserstoffs aufweist.

4. Flammhemmende Schaumstoffformulierung gemäß Anspruch 1, wobei das Diethyl(hydroxymethyl)phosphonat eine Konzentration in einem Bereich von 2 bis 8 GT pro 100 GT der Verbindung mit den Gruppen aktiven Wasserstoffs aufweist.

5. Flammhemmende Schaumstoffformulierung gemäß Anspruch 1, wobei das Polyisocyanat in einer Menge vorliegt, um einen Isocyanatindex von 130 bis 320 bereitzustellen.

6. Flammhemmende Schaumstoffformulierung gemäß einem der vorhergehenden Ansprüche, wobei das Polyisocyanat einen Gehalt an Isocyanat (NCO) von 10 bis 50 Gewichtsprozent NCO aufweist.

7. Flammhemmende Schaumstoffformulierung gemäß einem der vorhergehenden Ansprüche, wobei die Verbindung mit den Gruppen aktiven Wasserstoffs ausgewählt ist aus der Gruppe von Polyolen, Polyestern, Polyethern, Polyacrylaten, aminterminierten Polymeren und Kombinationen davon.

8. Flammhemmende Schaumstoffformulierung gemäß einem der vorhergehenden Ansprüche, wobei das Polyol ausgewählt ist aus der Gruppe von Polyetherpolyolen, Polyesterpolyolen, Polycarbonaten und Kombinationen davon.

9. Flammhemmende Schaumstoffformulierung gemäß einem der vorhergehenden Ansprüche, wobei das Treibmittel ausgewählt ist aus der Gruppe von Kohlendioxid, Ameisensäure, Alkanen, Hydrofluoralkanen und Kombinationen davon, geblasen in situ.

10. Flammhemmende Schaumstoffformulierung gemäß einem der vorhergehenden Ansprüche, wobei das Polyisocyanat von Methylendiphenyldüsocyanat abgeleitet ist.

11. Ein flammhemmender Schaumstoff, der durch Aushärten einer beliebigen der vorhergehenden Formulierungen gebildet wird.

## Revendications

1. Une formulation de mousse ignifuge comprenant :
de l'(hydroxyméthyl) phosphonate de diéthyle ;
du phosphate de triéthyle ;
un polyisocyanate ayant une fonctionnalité dans un intervalle de 2,0 à 10,0, le polyisocyanate étant présent en une quantité pour fournir un indice d'isocyanate de 100 à 320 ;
un composé ayant des groupes à hydrogène actif capables de réagir avec le polyisocyanate ;
un agent gonflant ; et
un catalyseur.

2. La formulation de mousse ignifuge de la revendication 1, dans laquelle l'(hydroxyméthyl) phosphonate de diéthyle a une concentration dans un intervalle de 1 à 15 parties en poids (PEP) pour 100 PEP du composé ayant les groupes à hydrogène actif.

3. La formulation de mousse ignifuge de la revendication 1, dans laquelle l'(hydroxyméthyl) phosphonate de diéthyle a une concentration dans un intervalle de 1,5 à 10 PEP pour 100 PEP du composé ayant les groupes à hydrogène actif.

4. La formulation de mousse ignifuge de la revendication 1, dans laquelle l'(hydroxyméthyl) phosphonate de diéthyle a une concentration dans un intervalle de 2 à 8 PEP pour 100 PEP du composé ayant les groupes à hydrogène actif.

5. La formulation de mousse ignifuge de la revendication 1, dans laquelle le polyisocyanate est présent en une quantité pour fournir un indice d'isocyanate de 130 à 320.

6. La formulation de mousse ignifuge de n'importe laquelle des revendications précédentes, dans laquelle le polyisocyanate a une teneur en isocyanate (NCO) de 10 à 50 pour cent en poids de NCO.

7. La formulation de mousse ignifuge de n'importe laquelle des revendications précédentes, dans laquelle le composé ayant les groupes à hydrogène actif est sélectionné dans le groupe des polyols, polyesters, polyéthers, polyacrylates, polymères à terminaison amine, et des combinaisons de ceux-ci.

8. La formulation de mousse ignifuge de n'importe laquelle des revendications précédentes, dans laquelle le polyol est sélectionné dans le groupe des polyols de polyéther, polyols de polyester, polycarbonates, et des combinaisons de ceux-ci.

9. La formulation de mousse ignifuge de n'importe laquelle des revendications précédentes, dans laquelle l'agent gonflant est sélectionné dans le groupe des dioxyde de carbone, acide formique, alcanes, hydrofluoroalcanes, et des combinaisons de ceux-ci, à gonflement in situ.

10. La formulation de mousse ignifuge de n'importe laquelle des revendications précédentes, dans laquelle le polyisocyanate est dérivé de méthylène diphényl diisocyanate.

11. Une mousse ignifuge formée par durcissement de n'importe laquelle des formulations précédentes.
